# EUROPÄISCHE PATENTSCHRIFT

(11) **EP 2 510 246 B1**
(45) Veröffentlichungstag und Bekanntmachung des Hinweises auf die Patenterteilung: **05.03.2014**
(21) Anmeldenummer: 10763141.8
(22) Anmeldetag: 09.09.2010
(51) Int. Cl.: F16B 5/01, B29C 65/16, B23K 26/32, A47B 96/20, A47B 95/02, B32B 3/12, B32B 21/08, E05B 1/00, E05D 5/02, E06B 5/00, F16B 37/06, B29K 711/14

(54) **VERFAHREN UND VORRICHTUNG ZUM BEFESTIGEN EINES BESCHLAGELEMENTS AN EINER LEICHTBAUPLATTE SOWIE ENTSPRECHENDES BAUTEIL**
METHOD AND DEVICE FOR FASTENING A FITTING ELEMENT TO A LIGHT-WEIGHT BUILDING BOARD AND CORRESPONDING COMPONENT
PROCÉDÉ ET DISPOSITIF POUR FIXER UN ÉLÉMENT DE FERRURE SUR UN PANNEAU LÉGER ET ÉLÉMENT DE CONSTRUCTION CORRESPONDANT

(30) Priorität: 11.12.2009 DE 102009057795
(43) Veröffentlichungstag der Anmeldung: 17.10.2012
(73) Patentinhaber: Fritz Egger GmbH & Co. OG, 3105 Unterradlberg (AT)
(72) Erfinder: NIEDERER, Ralf, A-3213 Frankenfels (AT)
(74) Vertreter: Cohausz & Florack
(86) Internationale Anmeldenummer: PCT/EP2010/063234
(87) Internationale Veröffentlichungsnummer: WO 2011/069696

(56) Entgegenhaltungen:
- EP-A2- 2 224 140
- WO-A1-2008/080238
- DE-A1-102005 060 528

## Beschreibung

Die vorliegende Erfindung betrifft ein Verfahren zum Befestigen eines Beschlagelements an einer Leichtbauplatte, bei dem die folgenden Schritte durchgeführt werden: Bereitstellen einer Leichtbauplatte mit einer eine Außenseite und eine Innenseite aufweisenden oberen Deckplatte aus einem Holzwerkstoff, die mit einer die Außenseite mit der Innenseite verbindenden Ausnehmung versehen ist, mit einer eine Außenseite und eine Innenseite aufweisenden unteren Deckplatte aus einem Holzwerkstoff und mit einer zwischen der oberen Deckplatte und der unteren Deckplatte angeordneten leichten Mittellage, Bereitstellen eines Beschlagelements, Einsetzen des Beschlagelements zumindest abschnittsweise in die Ausnehmung, wobei mindestens eine Fügefläche des Beschlagelements im Innern der Leichtbauplatte mit dem Holzwerkstoff in Kontakt gebracht wird, und Erzeugen einer stoffschlüssigen Verbindung zwischen dem Beschlagelement und dem Holzwerkstoff im Bereich der mindestens einen Fügefläche.

Ferner betrifft die Erfindung eine entsprechende Vorrichtung zum Befestigen eines Beschlagelements an einer Leichtbauplatte zur Durchführung des vorangehenden Verfahrens insbesondere mit einer Einrichtung zum Erzeugen einer stoffschlüssigen Verbindung zwischen dem Beschlagelement und der Leichtbauplatte im Bereich mindestens einer Fügefläche des Beschlagelements.

Außerdem betrifft die Erfindung ein entsprechendes Bauteil, insbesondere hergestellt durch ein wie zuvor beschriebenes Verfahren mit einer Leichtbauplatte mit einer eine Außenseite und eine Innenseite aufweisenden oberen Deckplatte aus einem Holzwerkstoff, die mit einer die Außenseite mit der Innenseite verbindenden Ausnehmung versehen ist, mit einer eine Außenseite und eine Innenseite aufweisenden unteren Deckplatte aus einem Holzwerkstoff und mit einer zwischen der oberen Deckplatte und der unteren Deckplatte angeordneten leichten Mittellage, und mit einem Beschlagelement, das zumindest abschnittsweise in die Ausnehmung eingesetzt ist.

Bei einer Leichtbauplatte im Sinne der vorliegenden Erfindung handelt es sich um eine mindestens dreilagige Platte mit zwei Deckplatten und einer dazwischen angeordneten leichten Mittellage. Die Deckplatten bestehen zumeist aus einem relativ stabilen und relativ harten Material einer relativ hohen Dichte, einem sogenannten Holzwerkstoff, beispielsweise einer Span-, Faser- oder OSB-Platte (Oriented-Strand-Board-Platte). Die Mittellage besteht aus einem "leichten" Material, welches also gegenüber den Deckplatten eine geringere Dichte bzw. ein geringeres Gewicht aufweist. Letztere werden häufig in Form einer Wabenstruktur oder in Form einer Schaumstoffplatte bereitgestellt.

Aus dem Stand der Technik ist es bekannt, Leichtbauplatten mit Beschlägen wie Griffen oder Scharnieren zu versehen. Dieses ist insbesondere bei Möbelteilen oder auch bei Türen bekannt.

Zur Befestigung von Beschlägen an Holzwerkstoffplatten einer relativ großen Dicke werden in aller Regel mechanische Befestigungsmittel verwendet. Insbesondere werden die Beschläge mit Schrauben an der Oberfläche der Holzwerkstoffplatte befestigt. Bei Leichtbauplatten weisen die aus dem Holzwerkstoff (der Holzwerkstoffplatte) bestehenden Deckplatten aber oftmals eine Stärke von nur wenigen Millimetern auf und sind damit zu dünn, um eine stabile Befestigung mittels Schrauben zu gewährleisten. Für diese Zwecke ist es bekannt, ein Beschlagelement, gemeint ist damit im Sinne der vorliegenden Erfindung jedes mit einem Beschlag verbundene oder verbindbare Element, beispielsweise Adapter, Bolzen, Hülse oder dergleichen, oder der Beschlag selbst, in einer entsprechenden Ausnehmung in der Leichtbauplatte mittels eines Klebemittels zu verankern. Entsprechende Ausnehmungen können beispielsweise in Form von die obere Deckplatte vollständig durchdringenden Öffnungen, insbesondere Bohrungen, vorgesehen sein, wobei die Ausnehmungen häufig auch durch die gesamte Mittellage bis zur Innenseite der unteren Deckplatte reichen. In diesen Ausnehmungen werden die Beschlagelemente dann mit der oberen und/oder unteren Deckplatte verklebt. Auf diese Weise wird der Beschlag bzw. das Beschlagelement besonders fest mit der Leichtbauplatte verbunden und kann, insbesondere wenn das Beschlagelement im Innern der Leichtbauplatte auch mit der Innenseite der unteren Deckplatte verklebt ist, relativ hohe Lasten aufnehmen, ohne dadurch auszureißen.

Ein Verkleben stellt jedoch einen aufwendigen Verfahrensschritt dar. Insbesondere das Auftragen und Aushärten des Klebstoffes sowie das Positionieren des Beschlagelements relativ zu der oder den Ausnehmungen in der Leichtbauplatte stellen aufwendige Verfahrensschritte dar.

Ein bekanntes Verfahren besteht beispielsweise in der Anbringung eines Dübels mit einem Klebstoffzuführkanal, nämlich eines Dübels als Beschlagelement, der zunächst ohne Klebemittel in die Ausnehmung eingesetzt wird und in den dann in einem nachfolgenden Verfahrensschritt ein flüssiges Klebemittel eingespritzt wird, das sich durch in dem Dübel befindliche Kanäle um den Dübel herum verteilt und, nach dem Aushärten, eine stoffschlüssige Verbindung zwischen dem Dübel und den Deckplatten der Leichtbauplatte herstellt. Die Dübel mit Klebstoffzuführkanal sind aber aufgrund ihrer komplexen Form relativ teuer und führen außerdem zu einem relativ hohen Materialverbrauch an Klebemittel. Ein weiterer Nachteil ist die lange Aushärtezeit des Klebemittels.

Eine Alternative zum Verkleben eines Beschlagelements mit einer Leichtbauplatte beschreibt die EP 1 858 679 A1. Hierbei weist das Beschlagelement bereits vor dem Verbinden mit der Leichtbauplatte ein noch zu aktivierendes Klebemittel auf, welches beim Einführen des Beschlagelements in die Ausnehmung noch keine nennenswerten Klebeeigenschaften aufweist. Erst nach dem Einsetzen des Beschlagelements wird das Klebemittel mittels magnetischer Induktion erwärmt und damit aktiviert. Sobald das Klebemittel ausgehärtet ist, besteht auch hier eine stoffschlüssige Verbindung. Auch dieses Verfahren führt zu einem relativ hohen Materialverbrauch, da die als Beschlagelemente dienenden Bauteile, in der Regel Hülsen, maschinell vorgefertigt und bereits werkseitig mit dem Klebemittel versehen werden, wobei das Klebemittel, um nicht eine Vielzahl unterschiedlicher Hülsen mit unterschiedlichen Klebeflächen vorhalten zu müssen, vorsorglich die gesamte Hülsenaußenseite umgibt. Das Klebemittel ist also nicht immer nur an der Stelle der Hülse vorgesehen, die später die Fügefläche bildet. Im Übrigen ist das Klebemittel, da es durch magnetische Induktion aktivierbar sein muss, relativ teuer.

Die DE 10 2005 060 528 A1 offenbart ein Verfahren zum Befestigen eines Beschlagelements in einer Leichtbauplatte, wobei das Beschlagelement in eine Ausnehmung eingefügt wird und dann mit einer Deckplatte verschmolzen wird. Hierfür besteht das Beschlagelement aus thermoplastischem Kunststoff und wird dann zumindest teilweise plastifiziert. Ein Verkleben durch Erwärmen des Beschlagelements ist allerdings problematisch, weil die Kontaktfläche an der Deckplatte beim Einbringen der Ausnehmung meist verschmutzt ist. Wird das Beschlagelement zu stark verflüssigt, kann es zu Verformungen kommen, die auch die mechanische Stabilität der Verbindung nachteilig beeinflussen.

Auf anderen technischen Gebieten als der Herstellung von Leichtbauplatten ist es außerdem bekannt, Bauteile aus einem lasertransparenten Kunststoff mit einem laserabsorbierenden Trägermaterial zu verbinden. Üblicherweise handelt es sich bei dem Trägermaterial ebenfalls um einen Kunststoff. In jüngster Zeit ist es dem Laser Zentrum Hannover e.V. auch gelungen, einen lasertransparenten Kunststoff außenseitig mit bestimmten Holzwerkstoffen, nämlich Spanplatten, Faserplatten und Massivholzplatten, zu verbinden. Dieses Verfahren eignet sich aber nur für den Fall relativ großer Fügeflächen, beispielsweise für den Fall, dass Möbelteile an den Schmalseiten mit einer Kunststoffbeschichtung in Form eines Kunststoffbandes versehen werden sollen. Kunststoffteile mit nur kleinen Fügeflächen, mit denen sie mit dem Holzwerkstoff in Kontakt kommen, lassen sich zwar ebenfalls auf diese Weise mit Holzwerkstoffplatten verbinden, die Verbindung hält aber keinen großen Lasten stand und ist damit für die Anbringung von Beschlägen ungeeignet.

Es ist daher die Aufgabe der vorliegenden Erfindung, ein Verfahren zum Befestigen eines Beschlagelements an einer Leichtbauplatte zu schaffen, welches zu einem geringeren Klebemittelverbrauch führt.

Die zuvor hergeleitete und aufgezeigte Aufgabe wird gemäß einer ersten Lehre der vorliegenden Erfindung gelöst durch ein Verfahren zum Befestigen eines Beschlagelements an einer Leichtbauplatte, bei dem die folgenden Schritte durchgeführt werden:
- Bereitstellen einer Leichtbauplatte mit einer eine Außenseite und eine Innenseite aufweisenden oberen Deckplatte aus einem Holzwerkstoff, die mit einer die Außenseite mit der Innenseite verbindenden Ausnehmung versehen ist, mit einer eine Außenseite und eine Innenseite aufweisenden unteren Deckplatte aus einem Holzwerkstoff und mit einer zwischen der oberen Deckplatte und der unteren Deckplatte angeordneten leichten Mittellage,
- Bereitstellen eines Beschlagelements,
- Einsetzen des Beschlagelements zumindest abschnittsweise in die Ausnehmung, insbesondere vollständig, so dass das Beschlagelement nicht aus der oberen Deckplatte herausragt, wobei mindestens eine Fügefläche des Beschlagelements im Innern der Leichtbauplatte mit dem Holzwerkstoff in Kontakt gebracht wird (Holzwerkstoff und Beschlagelement berühren sich also im Bereich der Fügefläche(n)), und
- Erzeugen einer stoffschlüssigen Verbindung zwischen dem Beschlagelement und dem Holzwerkstoff im Bereich der mindestens einen Fügefläche, das heißt im Innern der Leichtbauplatte,
wobei die stoffschlüssige Verbindung mittels
Laserdurchstrahlschweißen erzeugt wird, wobei das Beschlagelement zumindest im Bereich zwischen der mindestens einen Fügefläche und der jeweiligen Eintrittstelle des die stoffschlüssige Verbindung bewirkenden Laserstrahls in das Beschlagelement lasertransparent (für den Laserstrahl transparent) ist, wobei das Beschlagelement zumindest im Bereich der Fügefläche aus einem thermoplastischen Kunststoff besteht undwobei der Holzwerkstoff im Bereich, der mit der mindestens einen Fügefläche in Kontakt ist, laserabsorbierend (den Laserstrahl absorbierend) ist bzw. der Laserstrahl so eingestellt ist, dass er von dem Holzwerkstoff in diesem Bereich absorbiert wird.

Indem erstmalig für das Befestigen eines Beschlagelements an einer Leichtbauplatte das Laserdurchstrahlschweißen (auch Laserstransmissionsschweißen genannt) verwendet wird und indem das Beschlagelement lasertransparent und der Holzwerkstoff laserabsorbierend ist, kann zum Herstellen der stoffschlüssigen Verbindung auf ein separates Klebemittel verzichtet werden. Durch die lasertransparente Beschaffenheit des Beschlagelements und die laserabsorbierende Beschaffenheit des Materials der jeweiligen Deckplatte dringt der Laserstrahl durch das Material des Beschlagelements hindurch und erwärmt lokal nahezu nur den Teil des Holzwerkstoffes, der mit dem Beschlagelement in Kontakt ist. Der sich erwärmende Holzwerkstoff führt wiederum zu einer lokalen Erwärmung des Beschlagelements im Bereich der Fügeflächen, wodurch das Beschlagelement an diesen Stellen vorübergehend aufschmilzt und in die Poren des Holzwerkstoffes im zu den Fügeflächen benachbarten Bereich eindringt. Auf diese Weise entsteht nach dem Aushärten eine stoffschlüssige Verbindung.

Da auf ein Klebemittel verzichtet werden kann, entfällt auch der separate Verfahrensschritt des Aufbringens des Klebemittels auf das Beschlagelement bzw. auf die entsprechenden Kontaktflächen der Leichtbauplatte.

Ferner besteht ein weiterer Vorteil darin, dass das Beschlagelement durch das erfindungsgemäße Verfahren mit einfachen Mitteln im Innern der Leichtbauplatte verankert werden kann, wodurch gerade bei Leichtbauplatten eine erhöhte Stabilität der Beschlagelemente bzw. Beschläge erreicht wird. So sind die Beschlagelemente ohne weiteres auch mit der Innenseite der unteren Deckplatte verbindbar, wodurch das Risiko eines Ausreißens des Beschlagelements bei einer relativ großen Zugbeanspruchung verringert wird, da die Last auf beide Deckplatten und die Mittellage bzw. Wabenstruktur verteilt wird. Auch können auf diese Weise höhere Momente auf die Beschlagelemente wirken, als in dem Fall einer nur außenseitigen Befestigung der Beschlagelemente auf der oberen Deckplatte.

Gerade bei Leichtbauplatten ist das Laserdurchstrahlschweißen vorteilhaft, da eine lokale Erwärmung genau an den Kontaktflächen, das heißt Fügeflächen, erreicht werden kann, ohne dass damit eine Erwärmung - und dadurch Brandgefahr - innerhalb der Mittellage, die in der Regel aus Karton oder einer anderen leichte, leicht brennbaren Struktur besteht, resultiert.

Weiterhin kann erfindungsgemäß sehr rationell in einem einzigen Arbeitsgang an allen Fügeflächen eine Verbindung geschaffen werden und damit auch - gleichzeitig in einem Schritt - eine Verbindung zur oberen und zur unteren Deckplatte. Besonders bevorzugt wird also das Beschlagelement mit oberer und unterer Deckplatte gleichzeitig verbunden.

Gemäß einer Ausgestaltung des erfindungsgemäßen Verfahrens ist vorgesehen, dass das Beschlagelement zumindest in dem ins Innere der Leichtbauplatte ragenden Abschnitt, vorzugsweise vollständig, lasertransparent ist und/oder aus einem thermoplastischen Kunststoff besteht. Ein solches Beschlagelement, insbesondere ein vollständig lasertransparentes Beschlagelement, läßt sich auf einfache Weise mit nur einer einzigen Laserschweißeinrichtung an den jeweiligen Deckplatten befestigen. Ist das gesamte Beschlagelement lasertransparent, ist es sogar möglich, die Laserstrahlen von nur einem Punkt auszusenden, der vorzugsweise mittig über der Ausnehmung bzw. dem in die Ausnehmung eingesetzten Beschlagelement angeordnet werden kann, wobei die Laserstrahlen durch das Material des Beschlagelements hindurch alle mit dem Beschlagelement in Kontakt gebrachten Punkte bzw. Flächen des Holzwerkstoffes ohne weiteres erreichen können. Letzteres bietet sich beispielsweise an, wenn es sich bei dem Beschlagelement um ein hülsenförmiges Beschlagelement handelt. Es ist aber auch denkbar, dass die Laserschweißeinrichtung während des Aussendens der Laserstrahlen bewegt wird, so dass die Laserstrahlen von verschiedenen Punkten ausgesendet werden. Ein solches Verfahren bietet sich beispielsweise an, wenn es sich bei dem Beschlagelement um eine Profilleiste handelt, wobei dann die Laserschweißeinrichtung vorzugsweise entlang einer Längsmittelebene der Profilleiste, die insbesondere senkrecht zur Längsmittelebene der Leichtbauplatte verläuft, geführt werden kann. Die Laserschweißeinrichtung muss in diesem Fall nur in eine Richtung verfahrbar sein, wobei es aber grundsätzlich auch denkbar ist, dass beispielsweise für den Fall komplexerer Bauteile, insbesondere Beschlagelemente, die Laserschweißeinrichtung auch in verschiedene Richtungen verfahren und/oder um eine oder mehrere Achsen verschwenkt werden kann.

Für eine optimale Befestigung des Beschlagelements an der Leichtbauplatte, genauer gesagt in ihrem Inneren, sind verschiedene Ausgestaltungen des erfindungsgemäßen Verfahrens denkbar. Wesentlich ist dabei, dass die stoffschlüssige Verbindung zumindest in einem Bereich im Innern der Leichtbauplatte vorgesehen wird, gegebenenfalls auch in verschiedenen Bereichen im Innern, wobei zusätzlich auch Abschnitte des Beschlagelements außerhalb der Leichtbauplatte durch eine stoffschlüssige Verbindung mit dieser verbunden werden können.

Gemäß einer Ausgestaltung des erfindungsgemäßen Verfahrens wird die stoffschlüssige Verbindung zwischen der oberen Deckplatte und der mindestens einen Fügefläche entlang der Stirnkante der Ausnehmung erzeugt. Die Stirnkante der Ausnehmung kann eine senkrecht umlaufende Wandung sein. Auch andere Formen, beispielsweise eine kegelförmig umlaufende Wandung, sind denkbar. In diesem Bereich weist die Oberfläche aufgrund der herstellungsbedingt besonderen Struktur einer Holzwerkstoffplatte im Vergleich zur Außen- oder Innenseite einer Holzwerkstoffplatte eine relativ große Rauhigkeit auf, die nach dem Aushärten des vorübergehend verflüssigten Kunststoffs des Beschlagelements zu einer besonders stabilen Verbindung zwischen Beschlagelement und Holzwerkstoff führt.

Gemäß einer weiteren Ausgestaltung des erfindungsgemäßen Verfahrens wird die stoffschlüssige Verbindung zwischen der unteren Deckplatte und der mindestens einen Fügefläche zwischen der der unteren Deckplatte zugewandten Oberfläche des Beschlagelements und der Innenseite der unteren Deckplatte erzeugt. Auch kann in der Innenseite der unteren Deckplatte eine Ausnehmung vorgesehen sein, die vorzugsweise die untere Deckplatte nicht vollständig durchdringt, wobei diese Ausnehmung ebenfalls mit ihrem Boden und/oder ihrer Seitenwand eine Fügefläche bilden kann. Ist das Beschlagelement auch mit der Innenseite der unteren Deckplatte verbunden, also mit der der Ausnehmung in der oberen Deckplatte gegenüberliegenden Deckplatte, so wird eine optimale Kraftverteilung erreicht, wenn auf das Beschlagelement eine Zugkraft ausgeübt wird. In diesem Fall verteilt sich die Belastung auch über die untere Deckplatte und weiter über die Mittellage bis zur oberen Deckplatte. Eine optimale Stabilität und Ausreißsicherheit wird erreicht, wenn das Beschlagelement sowohl mit der unteren als auch der oberen Deckplatte auf die erfindungsgemäße Weise stoffschlüssig verbunden ist.

Zusätzlich oder alternativ kann, solange zumindest eine stoffschlüssige Verbindung zwischen Beschlagelement und Holzwerkstoff im Innern der Leichtbauplatte besteht, auch vorgesehen sein, dass eine weitere stoffschlüssige Verbindung zwischen der oberen Deckplatte und einer weiteren Fügefläche des Beschlagelements mittels Laserdurchstrahlschweißen zwischen einem außerhalb der Leichtbauplatte angeordneten kragenförmigen Abschnitt des Beschlagelements und der Außenseite der oberen Deckplatte erzeugt wird. Eine solche weitere stoffschlüssige Verbindung, die außerhalb der Leichtbauplatte vorgesehen wird, erhöht die Stabilität und Ausreißsicherheit noch um ein weiteres.

Zusätzlich zu der stoffschlüssigen Verbindung ist es vorteilhaft, wenn gemäß noch einer weiteren Ausgestaltung des erfindungsgemäßen Verfahrens beim Einsetzen des Beschlagelements in die Ausnehmung auch eine kraftschlüssige Verbindung zwischen dem Beschlagelement und dem Holzwerkstoff im Bereich der mindestens einen Fügefläche erzeugt wird. Ein Kraftschluss, auch Presssitz genannt, erleichtert die Montage des Beschlagelements, da dieses zunächst unter einem bestimmten Kraftaufwand in die Ausnehmung der oberen Deckplatte und gegebenenfalls der unteren Deckplatte gedrückt wird, wodurch das Beschlagelement zumindest während des Erzeugens der stoffschlüssigen Verbindung mittels Laserdurchstrahlschweißen sicher gehalten wird. Auch fördert ein Presssitz zwischen Fügefläche und benachbartem Holzwerkstoff das Eindringen von verflüssigtem Kunststoff in die Poren des Holzwerkstoffs während der laserbewirkten Erwärmung des Beschlagelements.

Dabei ist es nicht zwingend erforderlich, dass in allen Bereichen, in denen beim Einsetzen des Beschlagelements eine kraftschlüssige Verbindung besteht, auch eine stoffschlüssige Verbindung durch das erfindungsgemäße Verfahren erzeugt wird. So ist es auch denkbar, dass im Bereich mindestens einer der Fügeflächen nur eine kraftschlüssige Verbindung erzeugt wird. Eine solche Art der Befestigung eines Beschlagelements an einer Leichtbauplatte ist beispielsweise für den Fall ausreichend, dass das Beschlagelement nicht senkrecht zur Leichtbauplattenebene auf Zug beansprucht wird.

Der Energieeintrag beim Laserdurchstrahlschweißen kann gemäß einer Ausgestaltung des erfindungsgemäßen Verfahrens dadurch reduziert werden, dass der Holzwerkstoff zumindest abschnittweise neben Holzpartikeln und Bindemitteln, dies sind die grundlegenden Bestandteile eines Holzwerkstoffs, zusätzliche laserabsorbierende Partikel, insbesondere Ruß, enthält. Diese Partikel fördern die lokale Erwärmung des Holzwerkstoffs und damit die lokale Erwärmung der den Holzwerkstoff berührenden Fügeflächen des Beschlagelements. Besonders vorteilhaft ist es, wenn die zusätzlichen laserabsorbierenden Partikel möglichst nur in dem Bereich vorgesehen sind, der mit den Fügeflächen des Beschlagelements in Kontakt kommt. So erwärmt sich der mit den zusätzlichen laserabsorbierenden Partikeln versehene Bereich des Holzwerkstoffs schneller als das umliegende Material des Holzwerkstoffs, so dass der Wärmeeintrag lokal noch beschränkter erfolgen kann, was wiederum das Risiko vermindert, dass sich durch die im Holzwerkstoff entstehende Wärme die Leichtbauplatte verzieht oder beschädigt wird.

Eine ideale Verteilung der laserabsorbierenden Partikel innerhalb der oberen Deckplatte im Bereich der Stirnkante der Ausnehmung läßt sich dadurch erreichen, dass dem Holzwerkstoff der oberen Deckplatte über seine gesamte Dicke die laserabsorbierenden Partikel beigemengt sind. Dies gilt, insbesondere im Falle einer Ausnehmung auch in der unteren Deckplatte, auch für die untere Deckplatte. Dem Holzwerkstoff der unteren Deckplatte können aber auch nur im Bereich der Innenseite die laserabsorbierenden Partikel beigemengt sein, da dies der Bereich ist, der üblicherweise mit den Fügeflächen eines Beschlagelements in Kontakt kommen wird. Zusätzlich oder alternativ kann der Holzwerkstoff der unteren Deckplatte an der Innenseite auch mit einer die laserabsorbierenden Partikel enthaltenden Beschichtung versehen sein.

Gemäß noch einer weiteren Ausgestaltung des erfindungsgemäßen Verfahrens ist der Holzwerkstoff, der beim Bereitstellen der Leichtbauplatte in der oberen Deckplatte und/oder unteren Deckplatte vorgesehen ist, eine Spanplatte, OSB-Platte oder Faserplatte, insbesondere MDF- oder HDF-Platte. Diese Arten von Holzwerkstoffen haben sich aufgrund ihrer Struktur, insbesondere ihrer Oberflächenrauhigkeit im Bereich der Ausnehmung in der oberen und gegebenenfalls unteren Deckplatte, als besonders geeignet für eine stoffschlüssige Verbindung durch Laserdurchstrahlschweißen erwiesen.

Die Mittellage weist gemäß noch einer weiteren Ausgestaltung des erfindungsgemäßen Verfahrens eine Wabenstruktur, insbesondere Kartonwabenstruktur, auf. Dar bei einer Wabenstruktur einer Leichtbauplatte die Stege der Wabenstruktur üblicherweise senkrecht zur Leichtbauplattenebene verlaufen und üblicherweise auch nur eine relativ geringe Dicke haben, kommt zwangsläufig bei eingesetztem Beschlagelement nur relativ wenig Material der Mittellage mit diesem in Kontakt, so dass im Bereich der Mittellage kaum das Risiko besteht, dass die Laserstrahlen zu einem Aufschmelzen des Beschlagelements in diesem Bereich führen. Dies vermeidet unerwünschte Verformungen des Beschlagelements im Bereich der Mittellage und erlaubt außerdem, das Beschlagelement in diesem Bereich dünner auszuführen. Anders gesagt kann das Beschlagelement in den Bereichen, in denen es durch das Laserdurchstrahlschweißen zu einer Aufschmelzung des Kunststoffs kommt, dicker als in anderen Bereichen, insbesondere als im Bereich der Mittellage, ausgebildet sein.

Gemäß wiederum einer weiteren Ausgestaltung ist das Beschlagelement ein Bolzen, insbesondere mit einem Außengewinde, eine Hülse, insbesondere mit einem Innen-und/oder Außengewinde, oder eine Profilleiste. Eine Hülse oder ein Bolzen sind besonders geeignet, einen größeren, außen an der Leichtbauplatte anzubringenden Beschlag zu halten. Eine Profilleiste braucht nicht zwangsläufig eine Halterung für einen Beschlag bilden, sondern kann auch, beispielsweise in einer Seitenwand eines Möbelteils, eine Auflage für Regalböden oder eine Führungsschiene für eine auf Rollen gelagerte Schublade bilden. Auch kann eine solche Profilleiste aus optischen Gründen vorgesehen sein oder als Verstärkung der Leichtbauplatte dienen.

Ferner wird die zuvor hergeleitete und aufgezeigte Aufgabe gemäß einer zweiten Lehre der vorliegenden Erfindung gelöst durch eine Vorrichtung zum Befestigen eines Beschlagelements an einer Leichtbauplatte zur Durchführung des zuvor beschriebenen Verfahrens insbesondere mit einer Einrichtung zum Erzeugen einer stoffschlüssigen Verbindung zwischen dem Beschlagelement und der Leichtbauplatte im Bereich mindestens einer Fügefläche des Beschlagelements, wobei die Einrichtung zum Erzeugen einer stoffschlüssigen Verbindung eine Laserschweißeinrichtung ist.

Die Vorrichtung kann ein Bearbeitungszentrum oder ein Teil davon sein. Die Laserschweißeinrichtung kann frei schwenkbar gelagert sein und ist bevorzugt in ein Bearbeitungszentrum integriert. Die Komponenten des Bearbeitungszentrums können so eingerichtet sein, dass die notwendigen Ausnehmungen, die Positionierung der Beschlagteile und die Laserschweißeinrichtung mit Hilfe einer Recheneinheit gesteuert werden (CNC, CAM, etc.).

Die erfindungsgemäße Vorrichtung kann hinsichtlich ihrer Eignung zur Montage eines Beschlagelements speziell an einer Leichtbauplatte auf folgende Weise vorteilhaft weitergebildet sein. So ist denkbar, dass eine Einrichtung zum Halten einer Leichtbauplatte mit einer eine Außenseite und eine Innenseite aufweisenden oberen Deckplatte aus einem Holzwerkstoff, die mit einer die Außenseite mit der Innenseite verbindenden Ausnehmung versehen ist, mit einer eine Außenseite und eine Innenseite aufweisenden unteren Deckplatte aus einem Holzwerkstoff und mit einer zwischen der oberen Deckplatte und der unteren Deckplatte angeordneten leichten Mittellage vorgesehen ist. Auch kann eine Einrichtung zum Einsetzen des Beschlagelements in die Ausnehmung in der Leichtbauplatte vorgesehen sein. Schließlich kann auch eine Einrichtung zum Herstellen der Ausnehmung in der Leichtbauplatte vorgesehen sein. Eine solchermaßen ausgebildete Vorrichtung eignet sich besonders für eine automatisierte Befestigung eines Beschlagelements an einer Leichtbauplatte, beispielsweise sogar im Zuge der Herstellung der Leichtbauplatte, das heißt des miteinander Verbindens und gegebenenfalls Herstellens der mindestens drei Lagen der Leichtbauplatte. Eine solche Vorrichtung kann sowohl kontinuierlich als auch getaktet betrieben werden.

Gemäß einer dritten Lehre der vorliegenden Erfindung wird die zuvor hergeleitete und aufgezeigte Aufgabe bei einem Bauteil, insbesondere hergestellt durch ein wie zuvor beschriebenes Verfahren, mit einer Leichtbauplatte mit einer eine Außenseite und eine Innenseite aufweisenden oberen Deckplatte aus einem Holzwerkstoff, die mit einer die Außenseite mit der Innenseite verbindenden Ausnehmung versehen ist, mit einer eine Außenseite und eine Innenseite aufweisenden unteren Deckplatte aus einem Holzwerkstoff und mit einer zwischen der oberen Deckplatte und der unteren Deckplatte angeordneten leichten Mittellage und mit einem Beschlagelement, das zumindest abschnittsweise in die Ausnehmung eingesetzt ist, dadurch gelöst, dass im Innern der Leichtbauplatte eine mittels Laserdurchstrahlschweißen erzeugte stoffschlüsssige Verbindung zwischen dem Beschlagelement und dem Holzwerkstoff im Bereich einer Fügefläche vorgesehen ist, dass das Beschlagelement zumindest im Bereich zwischen der mindestens einen Fügefläche und der jeweiligen Eintrittsstelle des. Laserstrahls, der die stoffschlüssige Verbindung erzeugt hat, lasertransparent ist, dass das Beschlagelement zumindest im Bereich der Fügefläche aus einem thermoplastischen Kunststoff besteht und dass der Holzwerkstoff im Bereich, der mit der mindestens einen Fügefläche in Kontakt ist, laserabsorbierend ist bzw. der Laserstrahl so eingestellt ist, dass er von dem Holzwerkstoff in diesem Bereich absorbiert wird.

Ein solches Bauteil zeichnet sich aufgrund der Befestigung des Beschlagelements mittels Laserdurchstrahlschweißen insbesondere durch seinen gleichmäßigen und insbesondere geschlossenen Nahtverlauf der Schweißnaht aus. Ein solches Bauteil ist auch besonders kostengünstig in seiner Herstellung, da aufgrund des Verzichts auf zusätzliches Klebemittel der Materialeinsatz gegenüber dem Stand der Technik deutlich minimiert ist. Außerdem sind solchermaßen befestigte Beschlagelemente sehr stabil und ausreißsicher mit der Leichtbauplatte verbunden. Eine weitere Erhöhung der Stabilität und Ausreißsicherheit kann noch dadurch erhöht werden, dass eine weitere stoffschlüssige Verbindung zwischen der oberen Deckplatte und einer weiteren mittels Laserdurchstrahlschweißen erzeugten Fügefläche des Beschlagelements zwischen einem außerhalb der Leichtbauplatte angeordneten kragenförmigen Abschnitt des Beschlagelements und der Außenseite der oberen Deckplatte vorgesehen ist.

Es gibt nun eine Vielzahl von Möglichkeiten, das erfindungsgemäße Verfahren, die erfindungsgemäße Vorrichtung und das erfindungsgemäße Bauteil auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Figuren 1 bis 4: schematisch den Ablauf eines Verfahrens zum Befestigen eines Beschlagelements an einer Leichtbauplatte gemäß der vorliegenden Erfindung und
- Figuren 5a) bis c): Ausführungsbeispiele von Bauteilen gemäß der vorliegenden Erfindung.

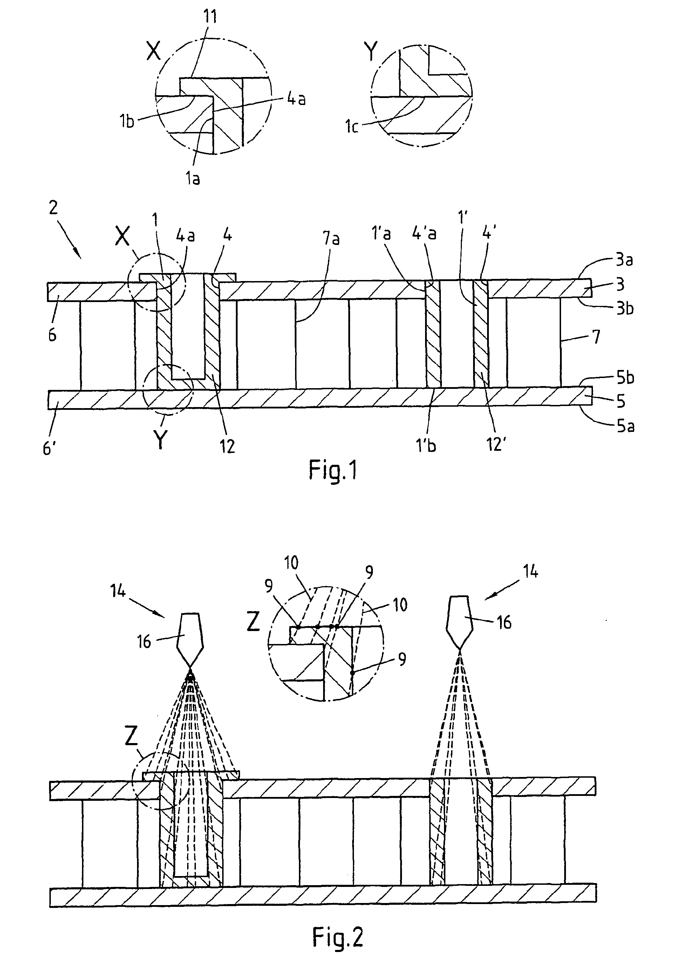

In den Figuren 1 bis 4 sind einzelne Verfahrensschritte eines Verfahrens zum Befestigen eines Beschlagelements 1 bzw. 1' an einer Leichtbauplatte 2 dargestellt.

Die Leichtbauplatte 2 wird mit einer eine Außenseite 3a und eine Innenseite 3b aufweisenden oberen Deckplatte 3 aus einem Holzwerkstoff 6, mit einer eine Außenseite 5a und eine Innenseite 5b aufweisenden unteren Deckplatte 5 aus einem Holzwerkstoff 6' und einer zwischen oberer Deckplatte 3 und unterer Deckplatte 5 angeordneten leichten Mittellage 7 bereitgestellt. Bei dem Holzwerkstoff 6 bzw. 6' handelt es sich in beiden Fällen um eine Spanplatte. Die Mittellage 7 weist eine Kartonwabenstruktur 7a auf.

In der oberen Deckplatte 3 ist ferner eine die Außenseite 3a mit der Innenseite 3b verbindende Ausnehmung 4, hier eine Bohrung, vorgesehen, durch die das Beschlagelement 1 bzw. 1' in die Leichtbauplatte 2 eingesetzt wird. Das linke der beiden in den Figuren 1 bis 4 dargestellte Beschlagelement 1 ist eine Hülse 12 mit einem einen Anschlag bildenden Kragen 11, der außerhalb der Leichtbauplatte 2 umlaufend an der Hülse 12 angeformt ist. Bei dem rechten Beschlagelement 1' handelt es sich ebenfalls um eine Hülse 12', wobei diese Hülse jedoch vollständig in die Ausnehmung 4' eingesetzt werden kann, so dass die Hülse 12' nicht nach oben aus der Deckplatte 3 herausragt.

Wie anhand der Details X und Y der Fig. 1 deutlich erkennbar ist, werden bei beiden Beschlagelementen 1 und 1' mehrere Fügeflächen, nämlich die Fügeflächen 1a und 1c des linken Beschlagelements 1 und die Fügeflächen 1'a und 1'b des rechten Beschlagelements 1' im Innern der Leichtbauplatte 2 mit dem jeweiligen Holzwerkstoff 6 bzw. 6' in Kontakt gebracht. Eine weitere Fügefläche 1b des linken Beschlagelements 1 ist an der Unterseite des kragenförmigen Abschnitts 11 mit der Außenseite 3a der oberen Deckplatte 3 in Kontakt gebracht.

Im Bereich all dieser Fügeflächen wird nun, wie die Figuren 2 bis 4 zeigen, eine stoffschlüssige Verbindung zwischen dem jeweiligen Beschlagelement 1 bzw. 1' und dem Holzwerkstoff 6 bzw. 6' erzeugt. Die stoffschlüssigen Verbindungen werden dabei mittels Laserdurchstrahlschweißen erzeugt. Das Beschlagelement 1 bzw. 1' ist dabei vollständig lasertransparent und besteht, ebenfalls vollständig, aus einem thermoplastischen Kunststoff. Der Holzwerkstoff 6 bzw. 6' ist vollständig laserabsorbierend ausgebildet.

Im in Fig. 2 dargestellten Verfahrensschritt wird eine Laserschweißeinrichtung 16, die Bestandteil einer Vorrichtung 14 zum Befestigen eines Beschlagelements an einer Leichtbauplatte 2 ist, aktiviert, wodurch Laserstrahlen 10 aus der Laserschweißeinrichtung 16 austreten und, nach dem Eintritt an den Eintrittsstellen 9 des jeweiligen Beschlagelements 1 bzw. 1', auf den Holzwerkstoff 6 bzw. 6' auftreffen und diesen erwärmen. Die in das jeweilige Beschlagelement 1 bzw. 1' eintretenden und auf den Holzwerkstoff 6 bzw. 6' auftreffenden Laserstrahlen 10 sind im Detail Z der Fig. 2 deutlicher zu erkennen.

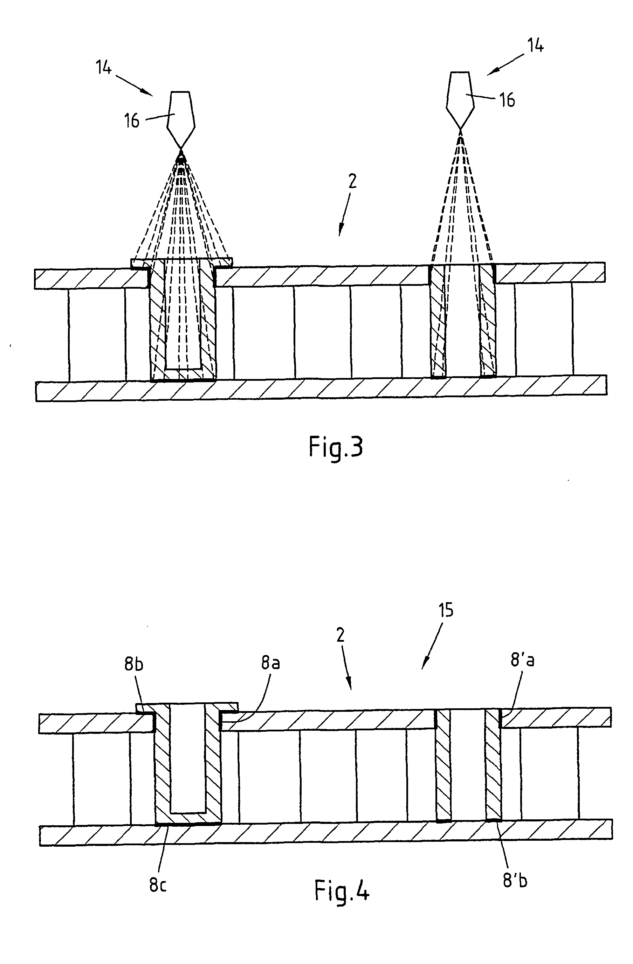

Durch das Erwärmen des jeweiligen Holzwerkstoffs 6 bzw. 6' wird das Material des Beschlagelements 1 bzw. 1' an den Fügeflächen 1a, 1b, 1c,1'a,1'b kurzzeitig verflüssigt (Fig. 3) und verbindet sich mit dem benachbarten Holzwerkstoff 6 bzw. 6' nach dem Aushärten zu einer stoffschlüssigen Verbindung (Fig. 4). So wird eine stoffschlüssige Verbindung 8a zwischen der oberen Deckplatte 3 und der Fügefläche 1a bzw. 1'a entlang der Stirnkante 4a bzw. 4'a der Ausnehmung 4 bzw. 4' erzeugt. Ferner wird eine stoffschlüssige Verbindung 8c zwischen der unteren Deckplatte 5 und der Fügefläche 1c bzw. 1'b zwischen der der unteren Deckplatte 5 zugewandten Oberfläche des Beschlagelements 1 bzw. 1' und der Innenseite 5b der unteren Deckplatte 5 erzeugt. Schließlich wird eine weitere stoffschlüssige Verbindung 8b bei dem linken Beschlagelement 1 zwischen der oberen Deckplatte 3 und der weiteren Fügefläche 1b im Bereich zwischen dem außerhalb der Leichtbauplatte 2 angeordneten kragenförmigen Abschnitt 11 des Beschlagelements 1 und der Außenseite 3a der oberen Deckplatte 3 erzeugt.

Fig. 4 zeigt das fertige Bauteil 15, welches durch das zuvor beschriebene Verfahren hergestellt worden ist.

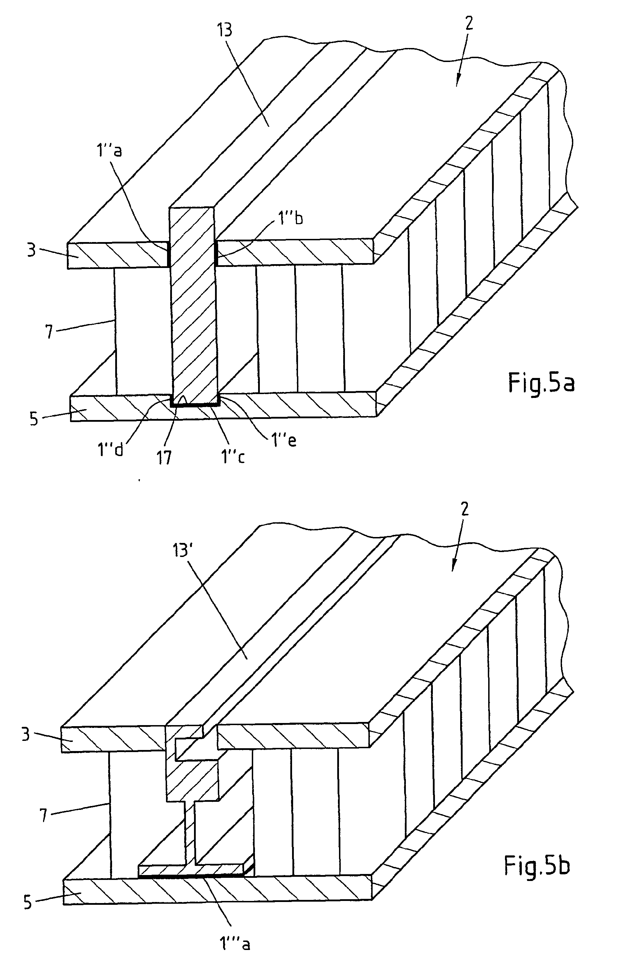

Die Figuren 5a) bis c) zeigen schließlich noch einige alternative Bauteile 15, bei denen anstelle einer Hülse eine Profilleiste 13 bzw. 13' bzw. 13'' als Beschlagelement vorgesehen ist.

Bei dem Ausführungsbeispiel gemäß Fig. 5a) ist die Profilleiste 13 über ihre Fügeflächen 1''a und 1''b mit der oberen Deckplatte 3 und über ihre Fügeflächen 1''c, 1''d und 1''e mit der unteren Deckplatte 5 durch jeweilige Ausbildung einer stoffschlüssigen Verbindung im Bereich der genannten Fügeflächen verbunden. Dabei ist in der unteren Deckplatte 5 eine zusätzliche Ausnehmung 17 vorgesehen, die zu einer besseren Verankerung der Profilleite 13 führt. Die so an der Leichtbauplatte 2 fixierte Profilleiste 13 kann als Auflage für Regalböden eines Möbelteils dienen.

Fig. 5b) zeigt eine Profilleiste 13', die über nur eine einzige Fügefläche 1'''a mit ausschließlich der unteren Deckplatte 5 im Innern der Leichtbauplatte 2 verbunden ist. Eine solche Profilleiste 13' kann beispielsweise als Aufnahme für die Rollen einer Schublade eines Möbelteils dienen.

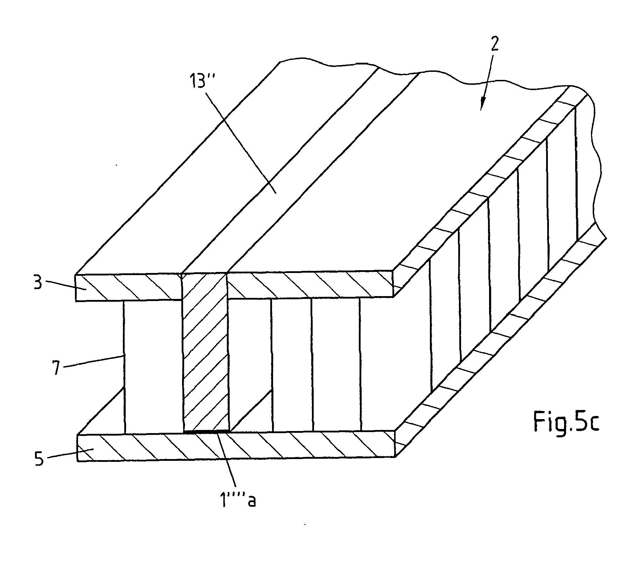

Fig. 5c) zeigt eine weitere Profilleiste 13'', die ebenfalls nur über eine einzige Fügefläche 1''''a mit der unteren Deckplatte 5 verbunden ist. Eine solche Profilleiste 13'' kann zur Verstärkung der Leichtbauplatte oder als Designelement in diese integriert sein. Beispielsweise kann die Profilleiste 13'' auch zur Abgabe von in diese eingeleitetem Licht dienen.

## Patentansprüche

1. Verfahren zum Befestigen eines Beschlagelements (1,1',12, 12',13,13',13'') an einer Leichtbauplatte (2), bei dem die folgenden Schritte durchgeführt werden:
- Bereitstellen einer Leichtbauplatte (2) mit einer eine Außenseite (3a) und eine Innenseite (3b) aufweisenden oberen Deckplatte (3) aus einem Holzwerkstoff (6,6'), die mit einer die Außenseite (3a) mit der Innenseite (3b) verbindenden Ausnehmung (4,4') versehen ist, mit einer eine Außenseite (5a) und eine Innenseite (5b) aufweisenden unteren Deckplatte (5) aus einem Holzwerkstoff (6,6') und mit einer zwischen der oberen Deckplatte (3) und der unteren Deckplatte (5) angeordneten leichten Mittellage (7),
- Bereitstellen eines Beschlagelements (1,1',12,12', 13,13',13''),
- Einsetzen des Beschlagelements (1,1',12,12',13,13', 13'') zumindest abschnittsweise in die Ausnehmung (4,4'), wobei mindestens eine Fügefläche (1a,1c,1'a, 1'b,1''a,1''b,1''c,1''d,1''e,1'''a,1''''a) des Beschlagelements (1,1',12,12',13,13',13'') im Innern der Leichtbauplatte (2) mit dem Holzwerkstoff (6,6') in Kontakt gebracht wird,
- Erzeugen einer stoffschlüssigen Verbindung (8a,8c, 8'a,8'b) zwischen dem Beschlagelement (1,1',12,12' ,13,13',13'') und dem Holzwerkstoff (6,6') im Bereich der mindestens einen Fügefläche (1a,1b,1c,1'a,1'b, 1''a,1''b,1''c,1''d,1''e,1'''a,1''''a), und
- wobei das Beschlagelement (1,1',12,12',13,13',13'') zumindest im Bereich der Fügefläche (1a,1c,1'a,1'b, 1''a,1''b,1''c,1''d,1''e,1'''a,1''''a) aus einem thermoplastischen Kunststoff besteht
**dadurch gekennzeichnet,**
- **dass** die stoffschlüssige Verbindung (8a,8c,8'a,8'b) mittels Laserdurchstrahlschweißen erzeugt wird,
- **dass** das Beschlagelement (1,1',12,12',13,13',13'') zumindest im Bereich zwischen der mindestens einen Fügefläche (1a,1c,1'a,1'b,1''a,1''b,1''c,1''d,1''e, 1'''a,1''''a) und der jeweiligen Eintrittstelle (9) des die stoffschlüssige Verbindung (8a,8c,8'a,8'b) bewirkenden Laserstrahls (10) in das Beschlagelement (1,1',12,12',13,13',13'') lasertransparent ist, und
- **dass** der Holzwerkstoff (6,6') im Bereich, der mit der mindestens einen Fügefläche (1a,1c,1'a,1'b,1''a, 1''b,1''c,1''d,1''e,1'''a,1''''a) in Kontakt ist, laserabsorbierend ist.

2. Verfahren nach Anspruch 1, **dadurch gekennzeichnet, dass** die stoffschlüssige Verbindung (8c,8'b) zwischen der unteren Deckplatte (5) und der mindestens einen Fügefläche (1c,1'b,1''c,1''d,1'''a,1''''a) zwischen der der unteren Deckplatte (5) zugewandten Oberfläche des Beschlagelements (1,1',12, 12',13,13',13'') und der Innenseite (5b) der unteren Deckplatte (5) erzeugt wird, wobei vorzugsweise die stoffschlüssige Verbindung (8c,8'b) mit der unteren Deckplatte (5) gleichzeitig mit einer stoffschlüssigen Verbindung (8a,8b,8c) mit der oberen Deckplatte (3) in einem einzigen Arbeitsgang erzeugt wird.

3. Verfahren nach einem der vorangehenden Ansprüche, **dadurch gekennzeichnet, dass** die stoffschlüssige Verbindung (8a,8'a) zwischen der oberen Deckplatte (3) und der mindestens einen Fügefläche (1a,1'a,1''a,1''b) entlang der Stirnkante (4a,4'a) der Ausnehmung (4) erzeugt wird.

4. Verfahren nach einem der vorangehenden Ansprüche, **dadurch gekennzeichnet, dass** eine weitere stoffschlüssige Verbindung (8b) zwischen der oberen Deckplatte (3) und einer weiteren Fügefläche (1b) des Beschlagelements (1) mittels Laserdurchstrahlschweißen zwischen einem außerhalb der Leichtbauplatte (2) angeordneten kragenförmigen Abschnitt (11) des Beschlagelements (1) und der Außenseite (3a) der oberen Deckplatte (3) erzeugt wird.

5. Verfahren nach einem der vorangehenden Ansprüche, **dadurch gekennzeichnet, dass** beim Einsetzen des Beschlagelements (1,1',12,12',13,13',13'') in die Ausnehmung (4) eine kraftschlüssige Verbindung zwischen dem Beschlagelement (1,1',12,12',13,13',13'') und dem Holzwerkstoff (6,6') im Bereich der mindestens einen Fügefläche (1a,1'a,1''a, 1''b,1''d,1''e) erzeugt wird, wobei insbesondere vorgesehen ist, dass im Bereich mindestens einer der Fügeflächen (1a,1'a,1''a, 1''b,1''d,1''e) nur eine kraftschlüssige Verbindung erzeugt wird.

6. Verfahren nach einem der vorangehenden Ansprüche, **dadurch gekennzeichnet, dass** der Holzwerkstoff (6,6') zumindest abschnittsweise neben Holzpartikeln und Bindemittel zusätzliche laserabsorbierende Partikel, insbesondere Ruß, enthält, wobei insbesondere vorgesehen ist,
- dass dem Holzwerkstoff (6) der oberen Deckplatte (3) über seine gesamte Dicke die laserabsorbierenden Partikel beigemengt sind
und/oder
- dass dem Holzwerkstoff (6') der unteren Deckplatte (5) nur im Bereich der Innenseite (5b) die laserabsorbierenden Partikel beigemengt sind und/oder der Holzwerkstoff (6') der unteren Deckplatte (5) an der Innenseite (5b) mit einer die laserabsorbierenden Partikel enthaltenden Beschichtung versehen ist.

7. Verfahren nach einem der vorangehenden Ansprüche, **dadurch gekennzeichnet, dass** das Beschlagelement (1,1',12,12', 13,13',13'') ein Bolzen, insbesondere mit einem Außengewinde, eine Hülse (12,12'), insbesondere mit einem Innen- und/oder Außengewinde, oder eine Profilleiste (13,13',13'') ist.

8. Vorrichtung (14) zum Befestigen eines Beschlagelements (1,1',12,12',13,13',13'') an einer Leichtbauplatte (2) zur Durchführung des Verfahrens nach einem der vorangehenden Ansprüche mit einer Einrichtung (16) zum Erzeugen einer stoffschlüssigen Verbindung (8a,8b, 8c,8'a,8'b) zwischen dem Beschlagelement (1,1',12,12', 13,13',13'') und der Leichtbauplatte (2) im Bereich mindestens einer Fügefläche (1a,1b,1c,1'a,1'b) des Beschlagelements (1,1',12,12',13,13',13''),
**dadurch gekennzeichnet, dass** die Einrichtung (16) zum Erzeugen einer stoffschlüssigen Verbindung (8a,8b,8c,8'a,8'b) eine Laserschweißeinrichtung (16) ist.

9. Vorrichtung (14) nach Anspruch 8, **dadurch gekennzeichnet, dass** eine Einrichtung zum Halten einer Leichtbauplatte (2) mit einer eine Außenseite (3a) und eine Innenseite (3b) aufweisenden oberen Deckplatte (3) aus einem Holzwerkstoff (6,6'), die mit einer die Außenseite (3a) mit der Innenseite (3b) verbindenden Ausnehmung (4,4') versehen ist, mit einer eine Außenseite (5a) und eine Innenseite (5b) aufweisenden unteren Deckplatte (5) aus einem Holzwerkstoff (6,6') und mit einer zwischen der oberen Deckplatte (3) und der unteren Deckplatte (5) angeordneten leichten Mittellage (7) vorgesehen ist.

10. Vorrichtung (14) nach Anspruch 8 oder 9, **dadurch gekennzeichnet, dass** eine Einrichtung zum Einsetzen des Beschlagelements (1,1',12,12',13,13',13'') in die Ausnehmung (4,4') in der Leichtbauplatte (2) vorgesehen ist.

11. Vorrichtung (14) nach einem der Ansprüche 8 bis 10,
**dadurch gekennzeichnet, dass** eine Einrichtung zum Herstellen der Ausnehmung (4,4') in der Leichtbauplatte (2) vorgesehen ist.

12. Vorrichtung (14) nach einem der Ansprüche 8 bis 11,
**dadurch gekennzeichnet, dass** die Laserschweißeinrichtung frei schwenkbar gelagert ist.

13. Vorrichtung (14) nach einem der Ansprüche 8 bis 12,
**dadurch gekennzeichnet, dass** die Vorrichtung (14) ein Bearbeitungszentrum ist, in das die Laserschweißeinrichtung integriert ist.

14. Bauteil (15), insbesondere hergestellt durch ein Verfahren nach einem der Ansprüche 1 bis 7,
- mit einer Leichtbauplatte (2) mit einer eine Außenseite (3a) und eine Innenseite (3b) aufweisenden oberen Deckplatte (3) aus einem Holzwerkstoff (6,6'), die mit einer die Außenseite (3a) mit der Innenseite (3b) verbindenden Ausnehmung (4,4') versehen ist, mit einer eine Außenseite (5a) und eine Innenseite (5b) aufweisenden unteren Deckplatte (5) aus einem Holzwerkstoff (6,6') und mit einer zwischen der oberen Deckplatte (3) und der unteren Deckplatte (5) angeordneten leichten Mittellage (7)
- mit einem Beschlagelement (1,1',12,12',13,13',13''), das zumindest abschnittsweise in die Ausnehmung (4,4') eingesetzt ist, und
- wobei das Beschlagelement (1,1',12,12',13,13',13'') zumindest im Bereich der Fügefläche (1a,1c,1'a,1'b, 1''a,1''b,1''c,1''d,1''e,1'''a,1''''a) aus einem thermoplastischen Kunststoff besteht
**dadurch gekennzeichnet,**
- **dass** im Innern der Leichtbauplatte (2) eine mittels Laserdurchstrahlschweißen erzeugte stoffschlüssige Verbindung (8a,8c,8'a,8'b) zwischen dem Beschlagelement (1,1',12,12',13,13',13'') und dem Holzwerkstoff (6,6') im Bereich einer Fügefläche (1a,1c,1'a,1'b,1''a,1''b, 1''c,1''d,1''e,1'''a,1''''a) vorgesehen ist,
- **dass** das Beschlagelement (1,1',12,12',13,13',13'') zumindest im Bereich zwischen der mindestens einen Fügefläche (1a,1c,1'a,1'b,1''a,1''b,1''c,1''d,1''e, 1'''a,1''''a) und der jeweiligen Eintrittsstelle (9) des Laserstrahls (10), der die stoffschlüssige Verbindung (8a,8c,8'a,8'b) erzeugt hat, lasertransparent ist, und
- **dass** der Holzwerkstoff (6,6') im Bereich, der mit der mindestens einen Fügefläche (1a,1c,1'a,1'b,1''a,1''b, 1''c,1''d,1''e,1'''a,1''''a) in Kontakt ist, laserabsorbierend ist.

15. Bauteil (15) nach Anspruch 14, **dadurch gekennzeichnet, dass** eine weitere stoffschlüssige Verbindung (8b) zwischen der oberen Deckplatte (3) und einer weiteren mittels Laserdurchstrahlschweißen erzeugten Fügefläche (1b) des Beschlagelements (1) zwischen einem außerhalb der Leichtbauplatte (2) angeordneten kragenförmigen Abschnitt (11) des Beschlagelements (1) und der Außenseite (3a) der oberen Deckplatte (3) vorgesehen ist.

## Claims

1. A method for fastening a fitting element (1, 1', 12, 12', 13, 13', 13'') to a lightweight board (2), in which which the following steps are carried out:
- providing a lightweight board (2) having an upper covering board (3), which has an outer side (3a) and an inner side (3b), which consists of a wood-based material (6, 6') and which is provided with a recess (4, 4') which connects the outer side (3a) to the inner side (3b), having a lower covering board (5), which has an outer side (5a) and an inner side (5b) and which consists of a wood-based material (6, 6'), and having a light central layer (7) which is arranged between the upper covering board (3) and the lower covering board (5),
- providing a fitting element (1, 1', 12, 12', 13, 13', 13''),
- inserting at least a section of the fitting element (1, 1', 12, 12', 13, 13', 13'') into the recess (4, 4'), wherein at least one joining face (1a, 1c, 1'a, 1'b, 1''a, 1''b, 1''c, 1''d, 1''e, 1'''a, 1''''a) of the fitting element (1, 1', 12, 12', 13, 13', 13'') is brought into contact with the wood-based material (6, 6') in the interior of the lightweight board (2),
- creating and adhesive bond (8a, 8c, 8'a, 8'b) between the fitting element (1, 1', 12, 12', 13, 13', 13'') and the wood-based material (6, 6') in the region of the at least one joining face (1a, 1b, 1c, 1'a, 1'b, 1''a, 1''b, 1''c, 1''d, 1''e 1'''a, 1''''a), and
- wherein the fitting element (1, 1', 12, 12', 13, 13', 13'') consists of a thermoplastic at least in the region of the joining face (1a, 1c, 1'a, 1'b, 1''a, 1''b, 1''c, 1''d, 1''e, 1'''a, 1''''a),
**characterised in that**
- the adhesive bond (8a, 8c, 8'a, 8'b) is created by laser transmission welding,
- the fitting element (1, 1', 12, 12', 13, 13', 13'') is laser-transparent at least in the region between the at least one joining face (1a, 1c, 1'a, 1'b, 1''a, 1''b, 1''c, 1''d, 1''e, 1'''a, 1''''a) and the respective point (9) at which the laser beam (10) effecting the adhesive bond (8a, 8c, 8'a, 8'b) enters the fitting element (1, 1', 12, 12', 13, 13', 13''), and
- the wood-based material (6, 6') is laser-absorbing in the region which is in contact with the at least one joining face (1a, 1c, 1'a, 1'b, 1''a, 1''b, 1''c, 1''d, 1''e, 1'''a, 1''''a).

2. The method according to Claim 1, **characterised in that** the adhesive bond (8c, 8'b) is created between the lower covering board (5) and the at least one joining face (1c, 1'b, 1''c, 1''d, 1'''a, 1''''a) between the surface of the fitting element (1, 1', 12, 12', 13, 13', 13'') which faces the lower covering board (5) and the inner side (5b) of the lower covering board (5), wherein the adhesive bond (8c, 8'b) to the lower covering board (5) is preferably created at the same time as an adhesive bond (8a, 8b, 8c) to the upper covering board (3) in a single work step.

3. The method according to any one of the preceding claims, **characterised in that** the adhesive bond (8a, 8'a) between the upper covering board (3) and the at least one joining face (1a, 1'a, 1''a, 1''b) is created along the end edge (4a, 4'a) of the recess (4).

4. The method according to any one of the preceding claims, **characterised in that** a further adhesive bond (8b) between the upper covering board (3) and a further joining face (1b) of the fitting element (1) is created by laser transmission welding between a collar-shaped section (11) of the fitting element (1) which is arranged outside the lightweight board (2) and the outer side (3a) of the upper covering board (3).

5. The method according to any one of the preceding claims, **characterised in that** when the fitting element (1, 1', 12, 12', 13, 13', 13'') is inserted into the recess (4), a frictional connection is created between the fitting element (1, 1', 12, 12', 13, 13', 13'') and the wood-based material (6, 6') in the region of the at least one joining face (1a, 1'a, 1''a, 1''b, 1''d, 1''e), wherein it is in particular provided for only one frictional connection to be created in the region of at least one of the joining faces (1a, 1'a, 1''a, 1''b, 1''d, 1''e).

6. The method according to any one of the preceding claims, **characterised in that** the wood-based material (6, 6') contains additional laser-absorbing particles, in particular carbon black, in addition to wood particles and binders, at least in some sections, wherein it is in particular provided for
- the laser-absorbing particles to be added to the wood-based material (6) of the upper covering board (3) over the entire thickness thereof, and/or
- the laser-absorbing particles to be added to the wood-based material (6') of the lower covering board (5) only in the region of the inner side (5b) and/or the wood-based material (6') of the lower covering board (5) to be provided on the inner side (5b) with a coating containing the laser-absorbing particles.

7. The method according to any one of the preceding claims, **characterised in that** the fitting element (1, 1', 12, 12', 13, 13', 13'') is a bolt, in particular having an outer thread, a bushing (12, 12'), in particular having an inner and/or outer thread, or a profiled bar (13, 13', 13'').

8. An apparatus (14) for fastening a fitting element (1, 1', 12, 12', 13, 13', 13'') to a lightweight board (2), for carrying out the method according to any one of the preceding claims, having a device (16) for creating an adhesive bond (8a, 8b, 8c, 8'a, 8'b) between the fitting element (1, 1', 12, 12', 13, 13', 13'') and the lightweight board (2) in the region of at least one joining face (1a, 1b, 1c, 1'a, 1'b) of the fitting element (1, 1', 12, 12', 13, 13', 13''), **characterised in that** the means (16) for creating an adhesive bond (8a, 8b, 8c, 8'a, 8'b) is a laser-welding device (16).

9. The apparatus (14) according to Claim 8, **characterised in that** a device is provided for holding a lightweight board (2), having an upper covering board (3), which has an outer side (3a) and an inner side (3b), which consists of a wood-based material (6, 6') and which is provided with a recess (4, 4') which connects the outer side (3a) to the inner side (3b), having a lower covering board (5), which has an outer side (5a) and an inner side (5b) and which consists of a wood-based material (6, 6'), and having a light central layer (7) which is arranged between the upper covering board (3) and the lower covering board (5).

10. The apparatus (14) according to Claim 8 or 9, **characterised in that** a device is provided for inserting the fitting element (1, 1', 12, 12', 13, 13', 13'') into the recess (4, 4') in the lightweight board (2).

11. The apparatus (14) according to one of Claims 8 to 10, **characterised in that** a device is provided for producing the recess (4, 4') in the lightweight board (2).

12. The apparatus (14) according to one of Claims 8 to 11, **characterised in that** the laser-welding device is mounted in a freely pivotable manner.

13. The apparatus (14) according to one of Claims 8 to 12, **characterised in that** the apparatus (14) is a machining centre, in which the laser-welding device is integrated.

14. An element (15), in particular produced by a method according to any one of Claims 1 to 7,
- comprising a lightweight board (2), having an upper covering board (3), which has an outer side (3a) and an inner side (3b), which consists of a wood-based material (6, 6') and which is provided with a recess (4, 4') which connects the outer side (3a) to the inner side (3b), having a lower covering board (5), which has an outer side (5a) and an inner side (5b) and which consists of a wood-based material (6, 6'), and having a light central layer (7) which is arranged between the upper covering board (3) and the lower covering board (5),
- comprising a fitting element (1, 1', 12, 12', 13, 13', 13''), at least a section of which is inserted into the recess (4, 4'), and
- comprising wherein the fitting element (1, 1', 12, 12', 13, 13', 13'') consists of a thermoplastic at least in the region of the joining face (1a, 1c, 1'a, 1'b, 1''a, 1''b, 1''c, 1''d, 1''e, 1'''a, 1''''a),
**characterised in that**
- an adhesive bond (8a, 8c, 8'a, 8'b), which is created by laser transmission welding, is provided in the interior of the lightweight board (2) between the fitting element (1, 1', 12, 12', 13, 13', 13'') and the wood-based material (6, 6') in the region of a joining face (1a, 1c, 1'a, 1'b, 1''a, 1''b, 1''c, 1''d, 1''e, 1'''a, 1''''a),
- the fitting element (1, 1', 12, 12', 13, 13', 13'') is laser-transparent at least in the region between the at least one joining face (1a, 1c, 1'a, 1'b, 1''a, 1''b, 1''c, 1''d, 1''e, 1'''a, 1''''a) and the respective entry point (9) of the laser beam (10) which has created the adhesive bond (8a, 8c, 8'a, 8'b), and
- the wood-based material (6, 6') is laser-absorbing in the region which is in contact with the at least one joining face (1a, 1c, 1'a, 1'b, 1''a, 1''b, 1''c, 1''d, 1''e, 1'''a, 1''''a).

15. The element (15) according to Claim 14, **characterised in that** a further adhesive bond (8b) is provided between the upper covering board (3) and a further joining face (1b), which is created by laser transmission welding, of the fitting element (1) between a collar-shaped section (11) of the fitting element (1) which is arranged outside the lightweight board (2) and the outer side (3a) of the upper covering board (3).

## Revendications

1. Procédé pour la fixation d'un élément de ferrure (1, 1', 12, 12', 13, 13', 13'') sur un panneau alvéolaire (2), dans lequel les étapes suivantes sont exécutées :
- mise à disposition d'un panneau alvéolaire (2) avec un panneau de couverture supérieur (3) comportant un côté extérieur (3a) et un côté intérieur (3b), constitué d'un produit dérivé du bois (6, 6'), et pourvu d'une cavité (4, 4') reliant le côté extérieur (3a) au côté intérieur (3b), avec un panneau de couverture inférieur (5) comportant un côté extérieur (5a) et un côté intérieur (5b) et constitué d'un produit dérivé du bois (6, 6'), et avec une couche intermédiaire légère (7) agencée entre le panneau de couverture supérieur (3) et le panneau de couverture inférieur (5),
- mise à disposition d'un élément de ferrure (1, 1', 12, 12', 13, 13', 13''),
- insertion de l'élément de ferrure (1, 1', 12, 12', 13, 13', 13'') au moins partiellement dans la cavité (4, 4'), dans lequel au moins une surface de jonction (1a, 1c, 1'a, 1'b, 1" a, 1''b, 1''c, 1''d, 1''e, 1'''a, 1''''a) de l'élément de ferrure (1, 1', 12, 12', 13, 13', 13'') à l'intérieur du panneau alvéolaire (2) est mise en contact avec le produit dérivé du bois (6, 6'),
- réalisation d'une liaison par matière (8a, 8c, 8'a, 8'b) entre l'élément de ferrure (1, 1', 12, 12', 13, 13', 13'') et le produit dérivé du bois (6, 6'), dans la région de l'au moins une surface de jonction (1a, 1b, 1c, 1'a, 1'b, 1''a, 1''b, 1''c, 1''d, 1''e, 1'''a, 1''''a), et
- dans lequel l'élément de ferrure (1, 1', 12, 12', 13, 13', 13") est constitué d'une matière thermoplastique au moins dans la région de la surface de jonction (1a, 1c, 1'a, 1'b, 1''a, 1''b, 1''c, 1''d, 1''e, 1'''a, 1''''a),
**caractérisé en ce que**
- la liaison par matière (8a, 8c, 8'a, 8'b) est réalisée au moyen d'un soudage au faisceau laser par transmission,
- l'élément de ferrure (1, 1', 12, 12', 13, 13', 13'') est transparent au laser au moins dans la région entre l'au moins une surface de jonction (1a, 1c, 1'a, 1'b, 1''a, 1''b, 1''c, 1''d, 1''e, 1'''a, 1''''a) et le point d'entrée (9) respectif du rayon laser (10) produisant la liaison par matière (8a, 8c, 8'a, 8'b) dans l'élément de ferrure (1, 1', 12, 12', 13, 13', 13''), et
- le produit dérivé du bois (6, 6') absorbe le rayon laser dans la région se trouvant en contact avec l'au moins une surface de jonction (1a, 1c, 1'a, 1'b, 1''a, 1''b, 1''c, 1''d, 1''e, 1'''a, 1''''a).

2. Procédé selon la revendication 1, **caractérisé en ce que** la liaison par matière (8c, 8'b) entre le panneau de couverture inférieur (5) et l'au moins une surface de jonction (1c, 1'b, 1''c, 1''d, 1'''a, 1''''a) est réalisée entre la surface de l'élément de ferrure (1, 1', 12, 12', 13, 13', 13'') qui est tournée vers le panneau de couverture inférieur (5) et le côté intérieur (5b) du panneau de couverture inférieur (5), dans lequel la liaison par matière (8c, 8'b) avec le panneau de couverture inférieur (5) est de préférence réalisée en même temps que la liaison par matière (8a, 8b, 8c) avec le panneau de couverture supérieur (3), au cours d'une seule étape de travail.

3. Procédé selon l'une des revendications précédentes, **caractérisé en ce que** la liaison par matière (8a, 8'a) entre le panneau de couverture supérieur (3) et l'au moins une surface de jonction (1a, 1'a, 1''a, 1''b) est réalisée le long du bord frontal (4a, 4'a) de la cavité (4).

4. Procédé selon l'une des revendications précédentes, **caractérisé en ce qu'**une autre liaison par matière (8b) entre le panneau de couverture supérieur (3) et une autre surface de jonction (1b) de l'élément de ferrure (1) est réalisée par soudage au faisceau laser par transmission entre une section en forme de col (11) de l'élément de ferrure (1) agencée à l'extérieur du panneau alvéolaire (2) et le côté extérieur (3a) du panneau de couverture supérieur (3).

5. Procédé selon l'une des revendications précédentes, **caractérisé en ce que** lors de l'insertion de l'élément de ferrure (1, 1' , 12, 12', 13, 13', 13'') dans la cavité (4), une liaison à force entre l'élément de ferrure (1, 1', 12, 12', 13, 13', 13'') et le produit dérivé du bois (6, 6') est réalisée dans la région de l'au moins une surface de jonction (1a, 1'a, 1''a, 1''b, 1''d, 1''e), dans lequel il est en particulier prévu de ne réaliser qu'une seule liaison à force dans la région d'au moins l'une des surfaces de jonction (1a, 1'a, 1" a, 1''b, 1''d, 1''e).

6. Procédé selon l'une des revendications précédentes, **caractérisé en ce que** le produit dérivé du bois (6, 6') contient, en plus des particules de bois et de l'agent liant, au moins par endroits des particules supplémentaires absorbant le rayon laser, en particulier de la suie, dans lequel il est en particulier prévu
- que les particules absorbant le rayon laser sont ajoutées au produit dérivé du bois (6) du panneau de couverture supérieur (3), sur l'ensemble de son épaisseur,
et/ou
- que les particules absorbant le rayon laser ne sont ajoutées au produit dérivé du bois (6') du panneau de couverture inférieur (5) que dans la région du côté intérieur (5b), et/ou que du côté intérieur (5b), le produit dérivé du bois (6') du panneau de couverture inférieur (5) est pourvu d'un revêtement contenant les particules absorbant le rayon laser.

7. Procédé selon l'une des revendications précédentes, **caractérisé en ce que** l'élément de ferrure (1, 1', 12, 12', 13, 13', 13") est un boulon, en particulier avec un filet extérieur, une douille (12, 12'), en particulier avec un filet intérieur et/ou extérieur, ou une baguette profilée (13, 13', 13'').

8. Dispositif (14) pour la fixation d'un élément de ferrure (1, 1', 12, 12', 13, 13', 13'') sur un panneau alvéolaire (2) pour l'exécution du procédé selon l'une des revendications précédentes, avec un moyen (16) pour la réalisation d'une liaison par matière (8a, 8b, 8c, 8'a, 8'b) entre l'élément de ferrure (1, 1', 12, 12', 13, 13', 13'') et le panneau alvéolaire (2), dans la région d'au moins une surface de jonction (1a, 1b, 1c, 1'a, 1'b) de l'élément de ferrure (1, 1', 12, 12', 13, 13', 13''),
**caractérisé en ce que** le moyen (16) pour la réalisation d'une liaison par matière (8a, 8b, 8c, 8'a, 8'b) est un moyen de soudage au laser (16).

9. Dispositif (14) selon la revendication 8, **caractérisé en ce qu'**il est prévu un moyen pour le maintien d'un panneau alvéolaire (2) avec un panneau de couverture supérieur (3) constitué d'un produit dérivé du bois (6, 6'), comportant un côté extérieur (3a) et un côté intérieur (3b), et pourvu d'une cavité (4, 4') reliant le côté extérieur (3a) au côté intérieur (3b), avec un panneau de couverture inférieur (5) constitué d'un produit dérivé du bois (6, 6') et comportant un côté extérieur (5a) et un côté intérieur (5b), et avec une couche intermédiaire légère (7) agencée entre le panneau de couverture supérieur (3) et le panneau de couverture inférieur (5).

10. Dispositif (14) selon la revendication 8 ou 9, **caractérisé en ce qu'**il est prévu un moyen pour l'insertion de l'élément de ferrure (1, 1', 12, 12', 13, 13', 13'') dans la cavité (4, 4') dans le panneau alvéolaire (2).

11. Dispositif (14) selon l'une des revendications 8 à 10, **caractérisé en ce qu'**il est prévu un moyen pour la réalisation de la cavité (4, 4') dans le panneau alvéolaire (2).

12. Dispositif (14) selon l'une des revendications 8 à 11, **caractérisé en ce que** le moyen de soudage au laser est monté de façon à pouvoir pivoter librement.

13. Dispositif (14) selon l'une des revendications 8 à 12, **caractérisé en ce que** le dispositif (14) est un centre de traitement, dans lequel est intégré le moyen de soudage au laser.

14. Élément (15), en particulier réalisé à l'aide d'un procédé selon l'une des revendications 1 à 7,
- avec un panneau alvéolaire (2) avec un panneau de couverture supérieur (3) comportant un côté extérieur (3a) et un côté intérieur (3b), constitué d'un produit dérivé du bois (6, 6'), et pourvu d'une cavité (4, 4') reliant le côté extérieur (3a) au côté intérieur (3b), avec un panneau de couverture inférieur (5) comportant un côté extérieur (5a) et un côté intérieur (5b) et constitué d'un produit dérivé du bois (6, 6'), et avec une couche intermédiaire légère (7) agencée entre le panneau de couverture supérieur (3) et le panneau de couverture inférieur (5),
- avec un élément de ferrure (1, 1', 12, 12', 13, 13', 13'') au moins partiellement inséré dans la cavité (4, 4'), et
- dans lequel l'élément de ferrure (1, 1', 12, 12', 13, 13', 13'') est constitué d'une matière thermoplastique au moins dans la région de la surface de jonction (1a, 1c, 1'a, 1'b, 1''a, 1''b, 1''c, 1''d, 1''e, 1'''a, 1''''a),
**caractérisé en ce que**
- à l'intérieur du panneau alvéolaire (2), il est prévu une liaison par matière (8a, 8c, 8'a, 8'b) entre l'élément de ferrure (1, 1', 12, 12', 13, 13', 13'') et le produit dérivé du bois (6, 6'), réalisée au moyen d'un soudage au faisceau laser par transmission dans la région de l'au moins une surface de jonction (1a, 1c, 1'a, 1'b, 1"a, 1''b, 1''c, 1''d, 1''e, 1'''a, 1''''a),
- l'élément de ferrure (1, 1', 12, 12', 13, 13', 13") est transparent au laser au moins dans la région entre l'au moins une surface de jonction (1a, 1c, 1'a, 1'b, 1''a, 1''b, 1''c, 1''d, 1''e, 1'''a, 1''''a) et le point d'entrée (9) respectif du rayon laser (10) ayant produit la liaison par matière (8a, 8c, 8'a, 8'b), et
- le produit dérivé du bois (6, 6') absorbe le rayon laser dans la région se trouvant en contact avec l'au moins une surface de jonction (1a, 1c, 1'a, 1'b, 1''a, 1''b, 1''c, 1''d, 1''e, 1'''a, 1''''a).

15. Élément (15) selon la revendication 14, **caractérisé en ce qu'**une autre liaison par matière (8b) entre le panneau de couverture supérieur (3) et une autre surface de jonction (1b) de l'élément de ferrure (1) réalisée par soudage au faisceau laser par transmission est prévue entre une section en forme de col (11) de l'élément de ferrure (1) agencée à l'extérieur du panneau alvéolaire (2) et le côté extérieur (3a) du panneau de couverture supérieur (3).
